# EUROPEAN PATENT APPLICATION

(11) **EP 4 782 490 A1**
(43) Date of publication of application: **29.07.2026**
(21) Application number: 24867806.2
(22) Date of filing: 12.04.2024
(51) Int. Cl.: C08J 11/12, B01J 19/12, B29B 17/02

(54) **PROCESSING SYSTEM AND PROCESSING METHOD**

(30) Priority: 19.09.2023 JP 2023150841
(71) Applicant: The Japan Steel Works, Ltd., Tokyo 141-0032 (JP)
(72) Inventor: UMEDA, Mitsuhide, Tokyo 141-0032 (JP); ISHIGURO, Ryo, Tokyo 141-0032 (JP); SHIGEMATSU, Tomoko, Tokyo 141-0032 (JP); FUKUDA, Mizuka, Tokyo 141-0032 (JP)
(74) Representative: Simmons & Simmons LLP (Munich)
(86) International application number: PCT/JP2024/014768
(87) International publication number: WO 2025/062717

(57) **Abstract**

A processing system (1) having a supply device (10), a switching mechanism (20), a thermal decomposition device (30), and a first recovery device (50). The supply device (10) continuously or intermittently supplies an object to be processed to a supply pipe (11) having a branched part. The switching mechanism (20) selectably switches the flow path for the object being processed in the branched part. The thermal decomposition device (30) receives the object being processed downstream of each of a plurality of branched supply pipes, and irradiates the received object being processed with microwaves to thermally decompose the object being processed. The first recovery device (50) sequentially recovers, from a plurality of thermal decomposition devices, a first product comprising a fluid generated by thermal decomposition.

## Description

### Technical Field

The present invention relates to a processing system and a processing method.

### Background Art

As a technology for decomposing waste plastic and extracting reusable materials therefrom, there is a method called chemical recycling.

For example, a processing apparatus disclosed in Patent Literature 1 heats waste plastic, thermally decomposes chlorine-based polymers, and thereby generates chlorine compounds. By doing so, the processing apparatus separates waste plastic into molten waste plastic and chlorine compounds.

### Citation List

### Patent Literature

Patent Literature 1: Japanese Unexamined Patent Application Publication No. 2002-317072

### Summary of Invention

It has been desired to further improve recycling technologies in order to realize the recycling-oriented society.

The present disclosure has been made in order to solve such a problem, and an object thereof is to provide a processing system and the like capable of efficiently recovering reusable materials.

A processing system according to the present disclosure includes a supply apparatus, a switching mechanism, thermal decomposition apparatuses, and a first recovery apparatus. The supply apparatus continuously or intermittently supplies a material to be processed to a supply pipe including a branch part. The switching mechanism switches a flow path of the material to be processed in the branch part so as to be selectable. Each of the thermal decomposition apparatuses receives the material to be processed on a downstream side of each of a plurality of the branched supply pipes, and thermally decomposes the received material to be processed by irradiating the received material to be processed with a microwave. The first recovery apparatus sequentially recovers a first product including a fluid generated by the thermal decomposition from each of a plurality of the thermal decomposition apparatuses.

In a processing method according to the present disclosure, a processing system performs the following processes. The processing system continuously or intermittently supplies a material to be processed to a supply pipe including a branch parts. The processing system sequentially selects a flow path of the material to be processed in the branch part. The processing system supplies the material to be processed to, among thermal decomposition apparatuses provided in a plurality of the respective branched supply pipes, the thermal decomposition apparatus related to the selection. The processing system causes the thermal decomposition apparatus that has received the material to be processed to thermally decompose the material to be processed. The processing system sequentially recovers a fluid generated after the thermal decomposition from each of a plurality of the thermal decomposition apparatuses.

According to the present disclosure, it is possible to provide a processing system and a processing method capable of efficiently recovering reusable materials.

### Brief Description of Drawings

Fig. 1 is an overall configuration diagram of a processing system according to a first embodiment;
Fig. 2 is a block diagram of the processing system according to the first embodiment;
Fig. 3 is a flowchart of a processing method according to the first embodiment;
Fig. 4 is a diagram showing changes in the states of a switching mechanism and a thermal decomposition apparatus;
Fig. 5 is a block diagram of the thermal decomposition apparatus;
Fig. 6 is a diagram showing a first state of the thermal decomposition apparatus;
Fig. 7 is a diagram showing a second state of the thermal decomposition apparatus;
Fig. 8 is a flowchart showing a processing method performed by the thermal decomposition apparatus; and
Fig. 9 is an overall configuration diagram of a processing system according to a second embodiment.

### Description of Embodiments

The present invention will be described hereinafter through embodiments of the present invention, but the present invention according to the claims is not limited to the below-shown embodiments. Further, not all of the components/structures described in the embodiments are indispensable as means for solving the problem. In order to clarify the explanation, the following descriptions and drawings are omitted and simplified as appropriate. Note that the same reference numerals are assigned to the same elements throughout the drawings, and redundant descriptions thereof are omitted as appropriate.

### <First Embodiment>

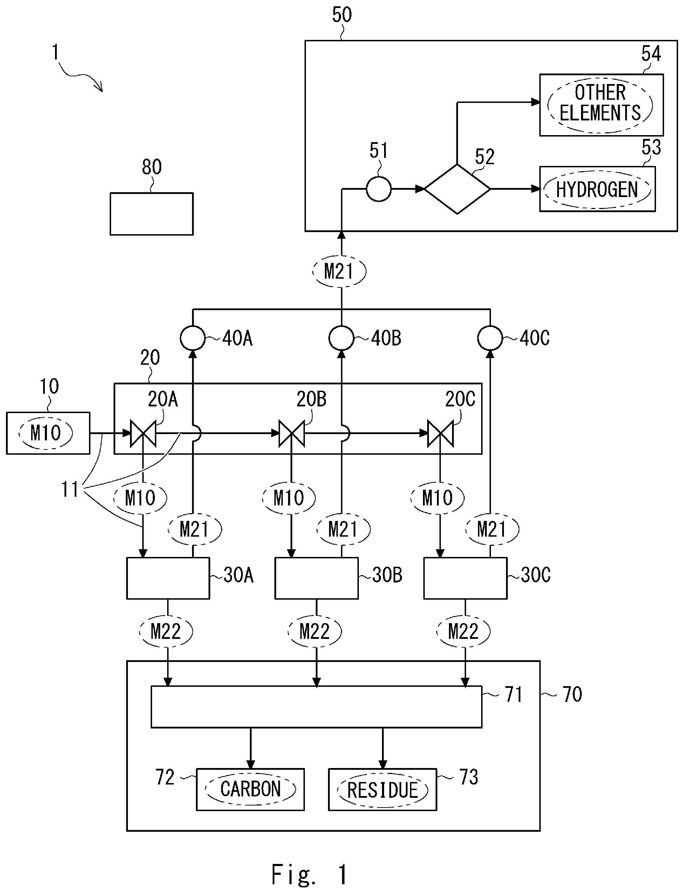

Embodiments according to the present invention will be described hereinafter with reference to the drawings. Fig. 1 is an overall configuration diagram of a processing system according to a first embodiment. Each of the components/structures of a processing system 1 shown in Fig. 1 is schematically shown to facilitate the understanding thereof. The processing system 1 thermally decomposes a material to be processed M10 and recovers a first product M21 and a second product M22. The processing system 1 includes, as main components, a supply apparatus 10, switching mechanisms 20, thermal decomposition apparatuses 30, pressure control valves 40, a first recovery apparatus 50, a second recovery apparatus 70, and a control apparatus 80.

Note that, in the present disclosure, components denoted by the same reference symbols have similar functions or configurations. Further, regarding the reference symbols of a plurality of the components shown in the present disclosure, one letter of an alphabet different from each other may be added after the same numeral. In this case, although the components having different alphabets are different from each other, they have similar functions or configurations.

The supply apparatus 10 continuously or intermittently supplies the material to be processed M10 to a supply pipe 11 including branch parts. The supply apparatus 10 is an extrusion apparatus which continuously extrudes the material to be processed M10 that has been heated and kneaded to the supply pipe. The supply apparatus 10 may be an injection apparatus which intermittently injects the material to be processed M10 that has been heated and kneaded into the supply pipe.

The supply apparatus 10 is connected to the control apparatus 80 so that it can communicate therewith, and operates in response to an instruction from the control apparatus 80. Further, the supply apparatus 10 includes one or more sensors such as a thermometer and a pressure gauge. The supply apparatus 10 may supply data about the sensor(s) provided therein to the control apparatus 80.

The material to be processed M10 contains at least a resin and a catalyst used to thermally decompose the resin. The resin is, for example, an arbitrary thermoplastic resin such as polyethylene (PE), polypropylene (PP), polycarbonate (PC), acrylonitrile butadiene styrene (ABS), or polyamide (PA), or is an arbitrary thermosetting resin such as epoxy, unsaturated polyester, polyimide, or polyurethane. Further, the resin may be a composite material in which carbon fibers, glass fibers, cellulose nanofibers, or the like are contained in a thermoplastic resin or a thermosetting resin. The catalyst contains a substance that generates heat when irradiated with predetermined microwaves and thereby accelerates the thermal decomposition of the resin. More specifically, the catalyst is an electromagnetic-wave absorber such as an iron oxide or carbon fibers. Further, the catalyst may also contain a substance that accelerates heating and thermal decomposition, such as citric acid.

The supply pipe 11 is a pipe which guides the material to be processed M10, which is continuously or intermittently supplied by the supply apparatus 10, to a plurality of the thermal decomposition apparatuses 30 through the branch parts. The switching mechanisms 20 are provided in the branch parts of the supply pipe 11. The supply pipe 11 shown in Fig. 1 includes three branch parts, each of which includes the switching mechanism 20.

Each of the switching mechanisms 20 switches a flow path of the material to be processed M10 in the branch part of the supply pipe 11 so as to be selectable. Each of the switching mechanisms 20 guides the material to be processed M10 coming from the supply pipe 11 on the upstream side to one of two branched supply pipes 11. The switching mechanisms 20 are connected to the control apparatus 80 so that they can communicate therewith, and switch the supply pipe 11 selected in response to an instruction from the control apparatus 80.

The processing system 1 includes, as the switching mechanisms 20, a switching mechanism 20A, a switching mechanism 20B, and a switching mechanism 20C. The switching mechanism 20A guides the material to be processed M10 coming from the supply apparatus 10 to a thermal decomposition apparatus 30A or the switching mechanism 20B. The switching mechanism 20B guides the material to be processed M10 coming from the switching mechanism 20A to a thermal decomposition apparatus 30B or the switching mechanism 20C.

The switching mechanism 20C is connected to the switching mechanism 20B and the thermal decomposition apparatus 30C, and is not branched. The switching mechanism 20C guides the material to be processed M10 coming from the switching mechanism 20B to the thermal decomposition apparatus 30C or stops guiding it to the thermal decomposition apparatus 30C. However, when the thermal decomposition apparatus 30 (e.g., a thermal decomposition apparatus 30D) is additionally provided in the processing system 1, the configuration of the switching mechanism 20C may be broadened so that the material to be processed M10 can be guided to the thermal decomposition apparatus 30D additionally provided. By the above-described configuration, each of the switching mechanisms 20 selects one or a plurality of the thermal decomposition apparatuses 30 to supply the material to be processed M10.

The thermal decomposition apparatuses 30 receive the material to be processed M10 on the downstream sides of a plurality of the respective branched supply pipes 11, and thermally decompose the received material to be processed M10 by irradiating it with microwaves. Each of the thermal decomposition apparatuses 30 generates the first product M21 and the second product M22 from the material to be processed M10 by thermal decomposition. Each of the thermal decomposition apparatuses 30 supplies the first product M21 to the first recovery apparatus 50. Each of the thermal decomposition apparatuses 30 supplies the second product M22 to the second recovery apparatus 70.

Each of the thermal decomposition apparatuses 30 is connected to the control apparatus 80 so that it can communicate therewith, and operates in response to an instruction from the control apparatus 80. Further, each of the thermal decomposition apparatuses 30 includes one or more sensors such as a thermometer and a pressure gauge. Each of the thermal decomposition apparatuses 30 may supply data about the sensor(s) provided therein to the control apparatus 80.

The first product M21 is a fluid and contains hydrogen. The second product M22 is a substance(s) other than the first product M21 and contains carbon. The carbon is, for example, CNTs (carbon nanotubes).

The microwaves are, for example, electromagnetic waves having a frequency of 300 MHz to 30 GHz, and preferably electromagnetic waves having a frequency of 2.45 GHz (2.45 gigahertz). Each of the thermal decomposition apparatuses 30 includes at least a magnetron for generating microwaves. The output of the magnetron is, for example, about 1,000 watts. Each of the thermal decomposition apparatuses 30 irradiates the received material to be processed M10 for, for example, about 5 to 10 minutes with microwaves. Note that the output of the magnetron and the irradiation time of the microwaves shown above are merely examples, and the operation of each of the thermal decomposition apparatuses 30 in this embodiment is not limited to the example shown here.

The processing system 1 includes, as the thermal decomposition apparatuses 30, the thermal decomposition apparatus 30A, the thermal decomposition apparatus 30B, and the thermal decomposition apparatus 30C. The thermal decomposition apparatus 30A is connected to the switching mechanism 20A, the first recovery apparatus 50, and the second recovery apparatus 70. Therefore, the thermal decomposition apparatus 30A thermally decomposes the material to be processed M10 received from the switching mechanism 20A, sends out the first product M21 generated by the thermal decomposition to the first recovery apparatus 50, and sends out the second product M22 generated by the thermal decomposition to the second recovery apparatus 70. Note that a pressure control valve 40A is interposed between the thermal decomposition apparatus 30 and the first recovery apparatus 50. Each of the pressure control valves 40 maintains the pressure of gas to be sent out within a constant range.

Similarly, the thermal decomposition apparatus 30B is connected to the switching mechanism 20B, and thermally decomposes the material to be processed M10 received from the switching mechanism 20B to generate the first product M21 and the second product M22. The thermal decomposition apparatus 30B sends out the first product M21 to the first recovery apparatus 50 and sends out the second product M22 to the second recovery apparatus 70 through a pressure control valve 40B.

The thermal decomposition apparatus 30C is connected to the switching mechanism 20C, and thermally decomposes the material to be processed M10 received from the switching mechanism 20C to generate the first product M21 and the second product M22. The thermal decomposition apparatus 30C sends out the first product M21 to the first recovery apparatus 50 and sends out the second product M22 to the second recovery apparatus 70 through the pressure control valve 40B.

The first recovery apparatus 50 sequentially recovers the first product M21 containing a fluid generated by the thermal decomposition from a plurality of the thermal decomposition apparatuses 30 (i.e., the thermal decomposition apparatus 30A, the thermal decomposition apparatus 30B, and the thermal decomposition apparatus 30C). The first recovery apparatus 50 extracts hydrogen from the recovered first product M21. The first recovery apparatus 50 includes, as main components, a pressure control valve 51, a hydrogen extraction apparatus 52, a pressure accumulator 53, and a gas recovery device 54.

The pressure control valve 51 supplies gas received from the upstream side to the downstream side at a constant pressure. The pressure control valve 51 receives the first product M21 from each of the pressure control valves 40 and supplies the received first product M21 to the hydrogen extraction apparatus 52.

The hydrogen extraction apparatus 52 selectively separates and extracts hydrogen from the first product M21 and supplies the extracted hydrogen to the pressure accumulator 53. The pressure accumulator 53 stores the hydrogen received from the hydrogen extraction apparatus 52. Further, the hydrogen extraction apparatus 52 supplies the gas after hydrogen is extracted from the first product M21 to the gas recovery device 54. The hydrogen extraction apparatus 52 includes, for example, a hydrogen permeable membrane. The hydrogen permeable membrane selectively permeates hydrogen and does not permeate anything other than hydrogen. The hydrogen extraction apparatus 52 may include means other than the hydrogen permeable membrane. For example, the hydrogen extraction apparatus 52 may separate hydrogen by cooling the first product M21 or may separate hydrogen by using a predetermined adsorbent.

The second recovery apparatus 70 receives the second product M22 from the thermal decomposition apparatuses 30 and stores the received second products M22. More specifically, the second recovery apparatus 70 sequentially recovers the second product M22 from the thermal decomposition apparatuses 30 and separates and extracts carbon from the recovered second products M22. The second recovery apparatus 70 includes, as main components, a separation apparatus 71, a carbon recovery device 72, and a residue recovery device 73. The separation apparatus 71 separates carbon and a residue other than the carbon from the second product M22. The separation apparatus 71 supplies the carbon separated from the second product M22 to the carbon recovery device 72 and supplies the residue to the residue recovery device 73.

The control apparatus 80 is an arithmetic apparatus including at least a Central Processing Unit (CPU) having an arithmetic function. The control apparatus 80 is, for example, a computer, a tablet terminal, or a smartphone. The control apparatus 80 may be a dedicated apparatus having an arithmetic function. The control apparatus 80 controls the components of the processing system 1. More specifically, for example, the control apparatus 80 controls the timing at which the switching mechanism 20 performs switching.

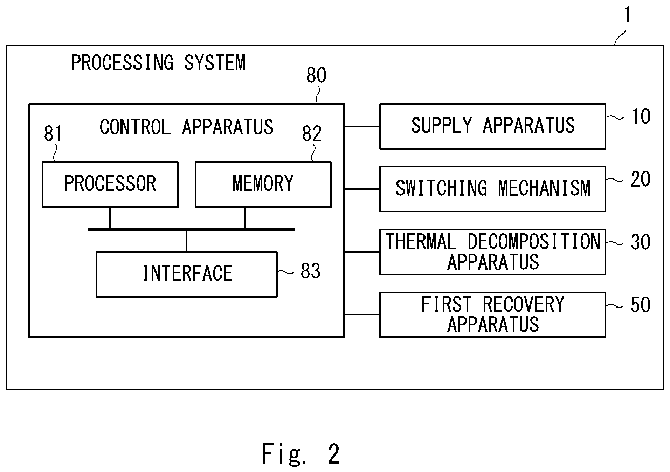

Next, the functions of the processing system 1 will be further described with reference to Fig. 2. Fig. 2 is a block diagram of the processing system 1 according to the first embodiment. Fig. 2 shows the processing system 1 divided into functional blocks. In the processing system 1, the control apparatus 80 is connected to the supply apparatus 10, the switching mechanism 20, the thermal decomposition apparatus 30, and the first recovery apparatus 50 so that it can communicate therewith.

Further, the control apparatus 80 includes, as main components, a processor 81, a memory 82, and an interface 83. The processor 81 is an arithmetic unit including a CPU, and controls the components in accordance with data acquired from these components. The memory 82 includes a nonvolatile memory for storing at least a program for executing the functions of the present disclosure, and a Random Access Memory (RAM) used when the control apparatus 80 operates. The interface 83 includes a communication circuit in accordance with a communication protocol for the control apparatus 80 to communicate with the components. The interface 83 also includes operation input means for receiving an operation performed by a user who manages the processing system 1.

By the above configuration, the control apparatus 80 controls the operations of the supply apparatus 10, the switching mechanism 20, and the thermal decomposition apparatus 30. For example, the control apparatus 80 controls the switching mechanism 20 so as to switch the flow path of the supply pipe 11 based on a predetermined switching condition. The switching condition is, for example, time. In this case, the control apparatus 80 controls the switching mechanism 20 so as to switch the flow path at each preset switching time. Further, in this case, the control apparatus 80 operates the thermal decomposition apparatus 30 in response to the control of the switching mechanism 20.

Further, the control apparatus 80 may control the switching mechanism 20 based on other switching conditions. Examples of the other switching conditions include an operation state of the thermal decomposition apparatus 30. For example, when the control apparatus 80 detects a state in which one of a plurality of the thermal decomposition apparatuses 30 has sent out the first product M21 and the second product M22, the control apparatus 80 may control the corresponding switching mechanism 20 so as to supply a new material to be processed M10 to this thermal decomposition apparatus 30.

The control apparatus 80 may acquire the state of the pressure of the pressure accumulator 53 from the first recovery apparatus 50 and control the operations of the supply apparatus 10 and the thermal decomposition apparatus 30 in accordance with the internal pressure of the pressure accumulator 53. That is, the control apparatus 80 may control the thermal decomposition apparatus 30 so as to stop the supply of the first product M21 when the pressure of the pressure accumulator 53 reaches a threshold value or higher. Further, in response to this, the control device 80 may control the supply apparatus 10 to stop supplying the material to be processed M10.

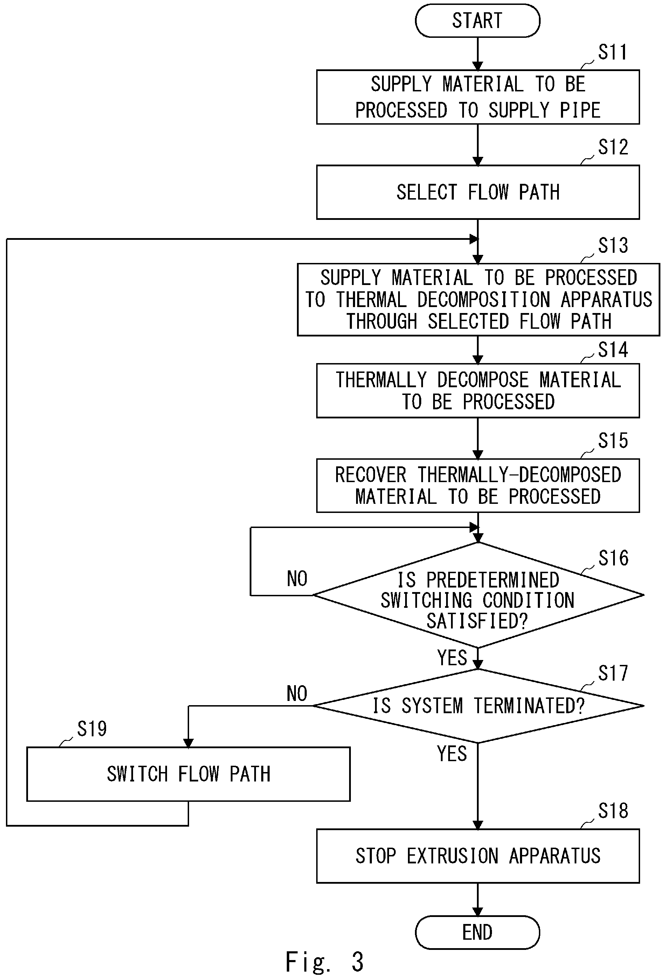

Next, processes performed by the processing system 1 will be described with reference to Fig. 3. Fig. 3 is a flowchart of a processing method according to the first embodiment. The flowchart in Fig. 3 shows processes performed by the control apparatus 80 of the processing system 1.

First, the control apparatus 80 continuously or intermittently supplies the material to be processed M10 to the supply pipe 11 including the branch parts (Step S11). More specifically, the supply apparatus 10 that has received an instruction from the control apparatus 80 starts the supply of the material to be processed M10.

Next, the switching mechanism 20 selects the flow path of the material to be processed M10 in the branch parts (Step S12). The material to be processed M10 is conveyed to the supply pipe 11 related to the selection through the flow path selected by the switching mechanism 20.

Next, the switching mechanism 20 supplies the material to be processed M10 to the thermal decomposition apparatus 30 related to the selection among the thermal decomposition apparatuses 30 provided in the respective branched supply pipes 11 (Step S13).

Next, the control apparatus 80 causes the thermal decomposition apparatus 30 which has received the material to be processed M10 to thermally decompose the material to be processed M10 (Step S14). That is, the thermal decomposition apparatus 30 irradiates the material to be processed M10 with microwaves.

Next, the first recovery apparatus 50 and the second recovery apparatus 70 respectively recover the materials to be processed M10 (i.e., the first product M21 and the second product M22) thermally decomposed by the thermal decomposition apparatus 30 (Step S15).

Next, the control apparatus 80 determines whether or not a predetermined switching condition is satisfied (Step S16). If the control apparatus 80 does not determine that the predetermined switching condition is satisfied (Step S16: NO), it repeats Step S16. On the other hand, if the control apparatus 80 determines that the predetermined switching condition is satisfied (Step S16: YES), the process proceeds to Step S17.

Note that the predetermined switching condition is, for example, a preset time. In this case, for example, when a timer is started simultaneously with the start of thermal decomposition and then a preset period of time has elapsed, the control apparatus 80 determines that the switching condition is satisfied.

In Step S17, the control apparatus 80 determines whether or not the system is terminated (Step S17). The case where the system is terminated is, for example, a case where a user performs an operation for instructing termination of the system. Alternatively, the case where the system is terminated is, for example, a case where there is no material to be processed M10 that can be supplied from the supply apparatus 10. If the control apparatus 80 determines that the system is terminated (Step S17: YES), the processing system 1 proceeds to Step S18, stops the supply apparatus 10 (Step S18), and ends a series of the processes. On the other hand, if the control apparatus 80 does not determine that the system is terminated (Step S17: NO), the processing system 1 proceeds to Step S19.

In Step S19, the switching mechanism 20 switches the flow path (Step S19). That is, the processing system 1 switches the thermal decomposition apparatus 30 for thermally decomposing the material to be processed M10. When the switching mechanism 20 switches the flow path, the processing system 1 returns to Step S13.

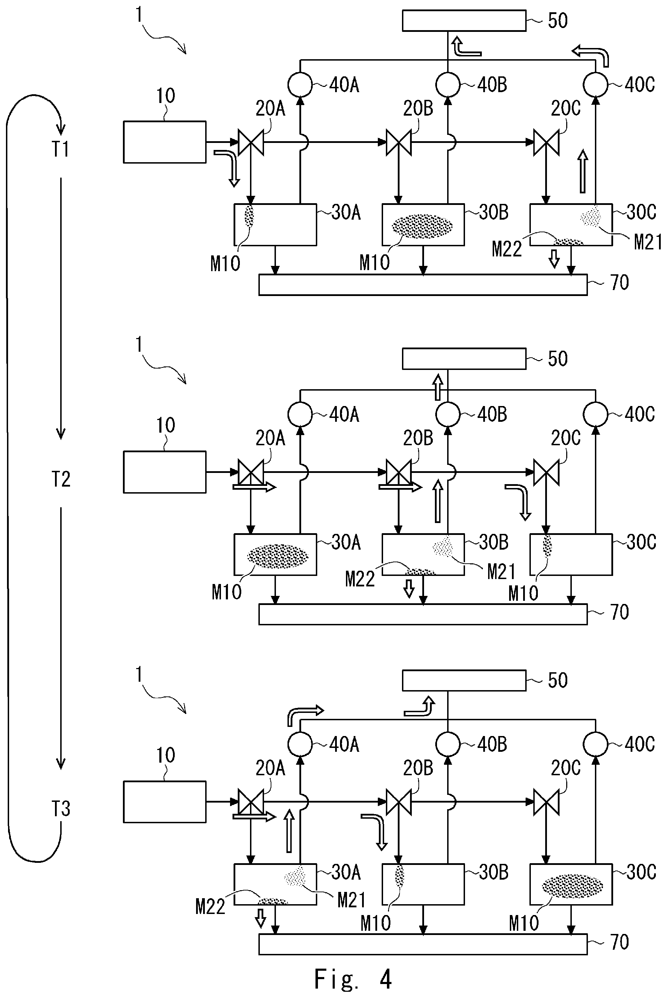

Next, switching of the flow path performed by the switching mechanisms 20 and the processes performed by the thermal decomposition apparatuses 30 associated with the switching of the flow path will be described with reference to Fig. 4. Fig. 4 is a diagram showing changes in the states of the switching mechanism and the thermal decomposition apparatus. The processing system 1 shown in Fig. 4 shows the processing system 1 in a state T1, the processing system 1 in a state T2 after the state T1, and the processing system 1 in a state T3 after the state T2 in the order from the top of the drawing.

In the state T1, the supply apparatus 10 supplies the material to be processed M10 to the switching mechanism 20A. The switching mechanism 20A is in a state in which it supplies the material to be processed M10 received from the supply apparatus 10 to the thermal decomposition apparatus 30A.

In this case, the thermal decomposition apparatus 30A is in a state in which it receives the material to be processed M10 from the supply apparatus 10 through the switching mechanism 20A. The thermal decomposition apparatus 30B is in a state in which it is thermally decomposing the material to be processed M10 already received. The thermal decomposition apparatus 30C is in a state in which it is sending out the first product M21 generated by thermally decomposing the material to be processed M10 to the first recovery apparatus 50, and sending out the second product M22 to the second recovery apparatus 70.

In the state T2 after the state T1, the supply apparatus 10 supplies the material to be processed M10 to the switching mechanism 20A. The switching mechanism 20A is in a state in which it supplies the material to be processed M10 received from the supply apparatus 10 to the switching mechanism 20B. The switching mechanism 20B is in a state in which it supplies the material to be processed M10 received from the switching mechanism 20A to the switching mechanism 20C. The switching mechanism 20C is in a state in which it supplies the material to be processed M10 received from the switching mechanism 20B to the thermal decomposition apparatus 30C.

In this case, the thermal decomposition apparatus 30C is in a state in which it receives the material to be processed M10 from the supply apparatus 10 through the switching mechanism 20A, the switching mechanism 20B, and the switching mechanism 20C. The thermal decomposition apparatus 30A is in a state in which it is thermally decomposing the material to be processed M10 already received. The thermal decomposition apparatus 30B is in a state in which it is sending out the first product M21 generated by thermally decomposing the material to be processed M10 to the first recovery apparatus 50, and sending out the second product M22 to the second recovery apparatus 70.

In the state T3 after the state T2, the supply apparatus 10 supplies the material to be processed M10 to the switching mechanism 20A. The switching mechanism 20A is in a state in which it supplies the material to be processed M10 received from the supply apparatus 10 to the switching mechanism 20B. The switching mechanism 20B is in a state in which it supplies the material to be processed M10 received from the switching mechanism 20A to the thermal decomposition apparatus 30B.

In this case, the thermal decomposition apparatus 30B is in a state in which it receives the material to be processed M10 from the supply apparatus 10 through the switching mechanism 20A and the switching mechanism 20B. The thermal decomposition apparatus 30C is in a state in which it is thermally decomposing the material to be processed M10 already received. The thermal decomposition apparatus 30A is in a state in which it is sending out the first product M21 generated by thermally decomposing the material to be processed M10 to the first recovery apparatus 50, and sending out the second product M22 to the second recovery apparatus 70.

After the state T3, the processing system 1 returns to the state T1 again and repeats the processes. In this way, in the processing system 1, the switching mechanisms 20 sequentially select the flow path of the material to be processed M10 in the branch parts. When the thermal decomposition apparatus 30 related to the selection receives the material to be processed M10, it thermally decomposes the received material to be processed M10. The first recovery apparatus 50 sequentially recovers the first product M21, which is a fluid generated after the thermal decomposition, from a plurality of the thermal decomposition apparatuses 30. Similarly, the second recovery apparatus 70 sequentially recovers the second product M22 generated after the thermal decomposition from the plurality of the thermal decomposition apparatuses 30.

The configuration of the processing system 1 and the processes performed by the processing system 1 have been described above. By the above-described configuration, the processing system 1 sequentially supplies the material to be processed M10, which is continuously or intermittently supplied by the supply apparatus 10, to a plurality of the thermal decomposition apparatuses 30. Furter, the processing system 1 sequentially recovers the first and the second products M21 and M22 generated by the thermal decomposition performed by the plurality of the thermal decomposition apparatuses 30. Therefore, the supply apparatus 10 can continuously and efficiently supply the material to be processed M10 to the thermal decomposition apparatuses 30 without being rate-limited by the processing of the thermal decomposition apparatuses 30. Further, the first recovery apparatus 50 can continuously recover the first product M21 without being rate-limited by the processing of the thermal decomposition apparatuses 30. Similarly, the second recovery apparatus 70 can continuously recover the second product M22 without being rate-limited by the processing of the thermal decomposition apparatuses 30.

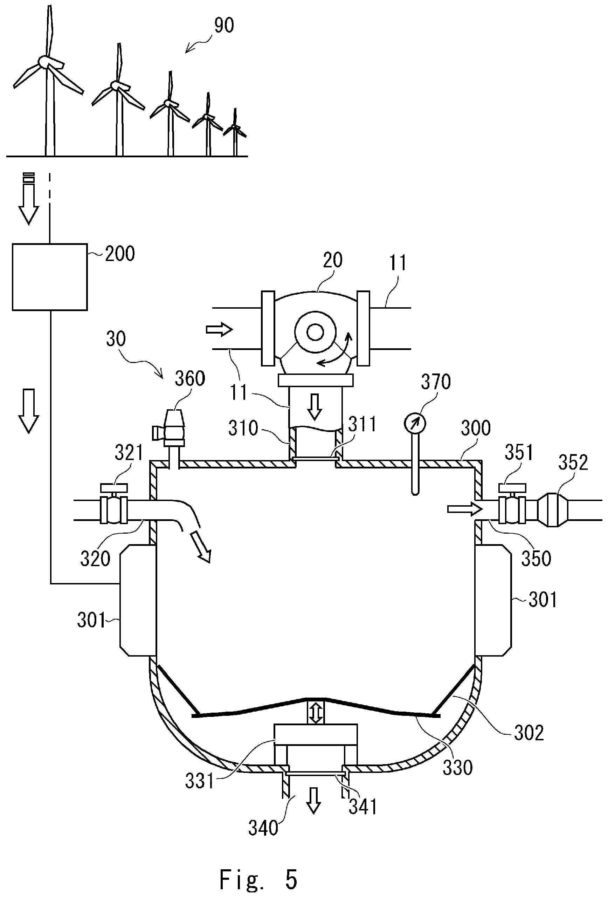

Next, the configuration of the thermal decomposition apparatus 30 will be described with reference to Fig. 5. Fig. 5 is a configuration diagram of the thermal decomposition apparatus. The thermal decomposition apparatus 30 includes, as main components, a container 300, an irradiation apparatus 301, a receiving port 310, a gas inlet 320, a tray 330, a tray driving unit 331, a second sending-out port 340, a first sending-out port 350, an exhaust valve 360, and a sensor 370.

The container 300 is a hollow housing formed of, for example, a heat-resistant metal or ceramic, and receives therein a predetermined amount of the material to be processed M10. The receiving port 310, the gas inlet 320, and the first sending-out port 350 are provided in an upper part of the container 300. Further, a lower part of the container 300 is shaped like a mortar, and the second sending-out port 340 is provided in the lowest part of the container 300. The container 300 houses the tray 330 and the tray driving unit 331. Further, the irradiation apparatus 301 is installed in an upper surface or a side surface of the container 300.

In order to thermally decompose the material to be processed M10 in the container 300, the irradiation apparatus 301 irradiates the material to be processed M10 with microwaves. The irradiation apparatus 301 includes one or more magnetrons for generating microwaves and one or more antennas for irradiating the container 300 with microwaves generated by the magnetron(s). Note that the container 300 has an electromagnetic wave transmission region for transmitting microwaves generated by the irradiation apparatus 301 to the inside of the container 300. The electromagnetic wave transmission region is formed by an opening for transmitting electromagnetic waves or a material capable of transmitting electromagnetic waves.

Note that the thermal decomposition apparatus 30 may include a plurality of the irradiation apparatuses 301. The antenna included in the irradiation apparatus 301 may include a movable part for changing an irradiation region of microwaves. By configuring the antenna to be movable, the thermal decomposition apparatus 30 can reduce the deviation of the microwave applied to the material to be processed M10.

The receiving port 310 is connected to the supply pipe 11 provided on the downstream side of the switching mechanism 20. Thus, the thermal decomposition apparatus 30 receives the material to be processed M10 from the supply pipe 11 through the receiving port 310.

The gas inlet 320 is an inlet for supplying an inert gas to the inside of the container 300 from the outside. The thermal decomposition apparatus 30 receives the material to be processed M10 and also receives an inert gas. The inert gas is, for example, helium, argon, nitrogen, or carbon dioxide. The thermal decomposition apparatus 30 starts the irradiation apparatus 301 in a state in which the container 300 is filled with the inert gas to apply microwaves. The gas inlet 320 includes an opening/closing valve 321, so that the supply of the inert gas to the container 300 can be controlled. Note that, in order to fill the inside of the container 300 with the inert gas, the thermal decomposition apparatus 30 may have, for example, a structure for evacuating the inside thereof by using a vacuum pump. In this case, the container 300 may include, for example, a suction port of the vacuum pump. The suction port of the vacuum pump communicates with the vacuum pump through the opening/closing valve.

Note that the container 300 may include a plurality of the gas inlets 320. Further, the gas inlet 320 may have, for example, a function of supplying an inert gas with a pressure sufficient to stir the material to be processed M10 or the second product M22 in the tray 330.

The tray 330 is a plate-shaped member having a surface extending in the horizontal direction over which the material to be processed M10 is placed when the material to be processed M10 is thermally decomposed. The tray 330 is formed by a flat or curved surface. Regarding the tray 330 shown in Fig. 5, the central part gently rises up in a spindle shape, and the outer peripheral part is lower than the central part. By this configuration, the surface area of the tray 330 is larger than that of a plane parallel to the horizontal plane. Therefore, the tray 330 can relatively increase the surface area of the material to be processed M10 placed over the tray 330. Thus, the tray 330 can relatively increase the region where the material to be processed M10 receives microwaves. Note that the shape of the uneven part of the tray 330 is not limited to the above-described form.

The tray driving unit 331 supports the tray 330 so that the tray 330 can move up and down from the lower side thereof. In a state in which the tray 330 is moved up by the tray driving unit 331, the outer peripheral part of the tray 330 is in contact with a side wall 302 protruding inward from the outer periphery of the container 300. Therefore, the material to be processed M10 that has fallen from the receiving port 310 is brought into a state in which it is placed over the upper surface of the tray 330. In a state in which the tray 330 is moved down by the tray driving unit 331, a gap is formed between the outer peripheral part of the tray 330 and the side wall 302. Therefore, the second product M22 generated after the thermal decomposition falls downward from the gap between the outer peripheral part of the tray 330 and the side wall 302. The second product M22 which has fallen from the tray 330 further falls down a mortar-shaped surface formed in the lower part of the container 300, and moves to the lower part of the container 300 through the second sending-out port 340.

Note that the tray driving unit 331 may drive the tray 330 so as to be rotated around a vertical axis. Further, the tray driving unit 331 may include a stirring member which penetrates the central part of the tray 330 and is rotatably provided in order to stir the material to be processed M10 in the penetrating part.

The second sending-out port 340 is an opening provided in the lower part of the container 300 and sends out the second product M22. The second sending-out port 340 includes a shutter 341 configured in such a manner that it can be opened and closed.

The first sending-out port 350 is an outlet for a fluid provided in the upper part of the container 300 and sends out the first product M21 generated by thermal decomposition. An opening/closing valve 351 and an exhaust fan 352 are provided in the first sending-out port 350. The opening/closing valve 351 is a valve configured in such a manner that it can be freely opened and closed, and is brought into an open state when the thermal decomposition apparatus 30 sends out the second product M22. When the opening/closing valve 351 is brought into an open state, the exhaust fan 352 provided on the downstream side of the opening/closing valve 351 pressure-feeds the second product M22 sent out from the first sending-out port 350 to the pressure control valve 40.

When the container 300 is filled with an inert gas through the gas inlet 320, the exhaust valve 360 exhausts other gases remaining inside. Further, the exhaust valve 360 may have a function of a safety valve for exhausting gas inside the container 300 in order to suppress an excessive increase in the internal pressure when the internal pressure exceeds a threshold value in the process in which thermal decomposition apparatus 30 performs thermal decomposition. Note that, when the container 300 is filled with an inert gas through the gas inlet 320, the thermal decomposition apparatus 30 may have a structure in which it is connectable to the vacuum pump described above instead of the exhaust valve 360 in order to exhaust other gases remaining inside. By exhausting other gases using the vacuum pump, the thermal decomposition apparatus 30 can efficiently change the environment inside the container 300.

The sensor 370 measures at least one of the temperature and the pressure inside the container 300. The sensor 370 may supply the measured data to the control apparatus 80.

The thermal decomposition apparatus 30 is connected to a secondary battery 200 and receives electric power supplied from the secondary battery 200. The secondary battery 200 supplies electric power to the thermal decomposition apparatus 30. More specifically, for example, the secondary battery 200 may supply electric power to the irradiation apparatus 301 of the thermal decomposition apparatus 30. The secondary battery 200 is, for example, a lithium ion battery.

Further, the secondary battery 200 can store electric power generated from renewable energy. The secondary battery 200 shown in Fig. 5 receives electric power supplied from a wind power generation system 90. The wind power generation system 90 is one embodiment of a power generation system using renewable energy. Note that, with regard to electric power for the supply apparatus 10 and the like in addition to the thermal decomposition apparatus 30, the processing system 1 may receive electric power supplied from the power generation system using renewable energy.

By the above-described configuration, the processing system 1 including the secondary battery 200 thermally decomposes the material to be processed M10 while reducing the environmental burden. Note that the power generation system using renewable energy may be one using solar light or geothermal heat. Further, the power generation system using renewable energy may include, for example, a system for generating electricity by a hydrogen boiler using generated hydrogen.

Note that the secondary battery 200 may be a reused product (reused product). The reused product includes, for example, a product that has been used in an electric vehicle or the like and then removed from the electric vehicle or the like because it no longer meets the specifications for use in the electric vehicle or the like. By adopting a reused product for the secondary battery 200, the processing system 1 can reduce the environmental burden.

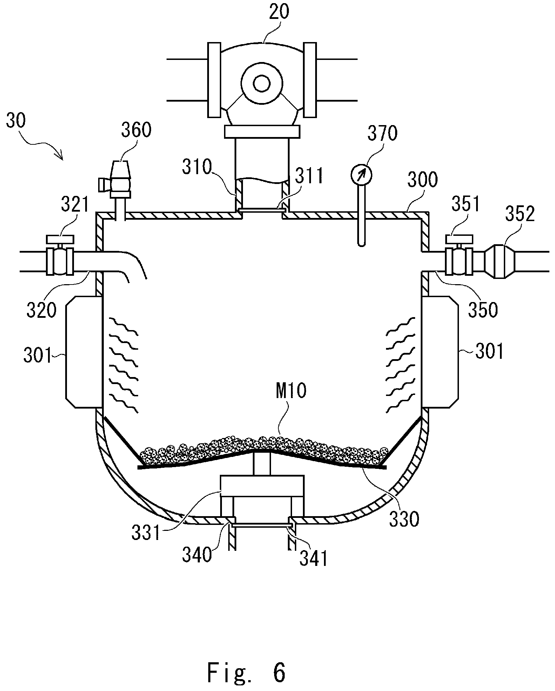

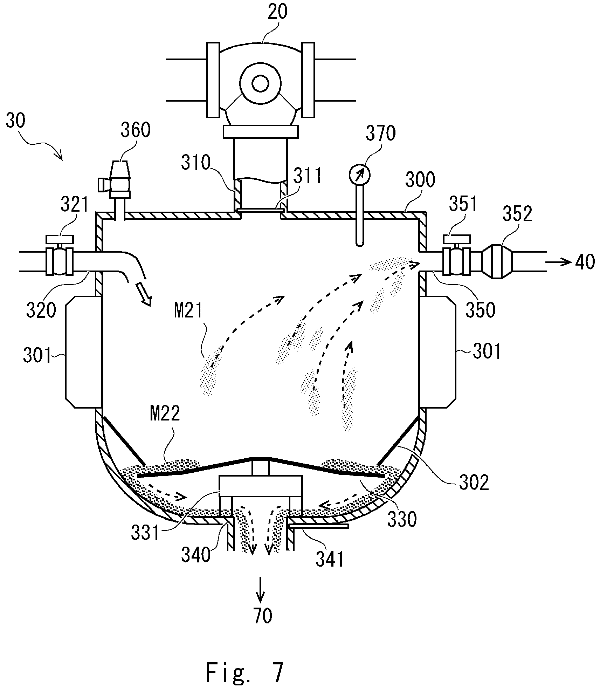

Next, an operation of the thermal decomposition apparatus 30 will be described with reference to Figs. 6 and 7. Fig. 6 is a diagram showing a first state of the thermal decomposition apparatus 30. In Fig. 6, the thermal decomposition apparatus 30 has received the material to be processed M10 through the receiving port 310, and the irradiation apparatus 301 is irradiating the received material to be processed M10 with microwaves.

As the thermal decomposition apparatus 30 irradiates the material to be processed M10 with microwaves, the material to be processed M10 is irradiated with the microwaves. Substances that absorb microwaves, such as an electromagnetic-wave absorber, contained in the material to be processed M10, which has been irradiated with the microwaves, are heated, so that their temperatures rise. As a result of this, the resin mixed in the material to be processed M10 is also heated and thermally decomposed. At this point, the temperature in a decomposition processing area 130 is, for example, 400°C to 900°C.

The polymer(s) of the heated resin is decomposed and converted into hydrogen, a lower hydrocarbon(s), an organic gas(es), and other intermediate products. When the thermal decomposition apparatus 30 further applies the microwaves, the thermal decomposition proceeds, and the first product M21 and the second product M22 may be generated from the material to be processed M10. After the material to be processed M10 is decomposed into the first and the second products M21 and M22, the thermal decomposition apparatus 30 stops the application of the microwaves.

Fig. 7 is a diagram showing a second state of the thermal decomposition apparatus 30. In Fig. 7, the thermal decomposition apparatus 30 is sending the first product M21 and the second product M22 out of the container 300. At this time, the tray is in a position where it has been moved down, and a gap through which the second product M22 can pass is formed between the tray 330 and the side wall 302. Further, in the second sending-out port 340, the shutter 341 is open. Therefore, the second product M22 falls from the outer peripheral part of the tray 330 to the lower part of the container 300, and further moves to the second recovery apparatus 70 through the second sending-out port 340.

Further, in Fig. 7, the opening/closing valve 351 of the first sending-out port 350 is open, and the exhaust fan 352 is driven so as to pressure-feed the fluid in the container 300 to the pressure control valve 40. Thus, the first product M21 is sucked into the first sending-out port 350 and sent out of the container 300. Note that, at this time, an inert gas may be supplied from the gas inlet 320. By supplying an inert gas from the gas inlet 320, the thermal decomposition apparatus 30 can expedite the sending-out of the first product M21 to the first sending-out port 350.

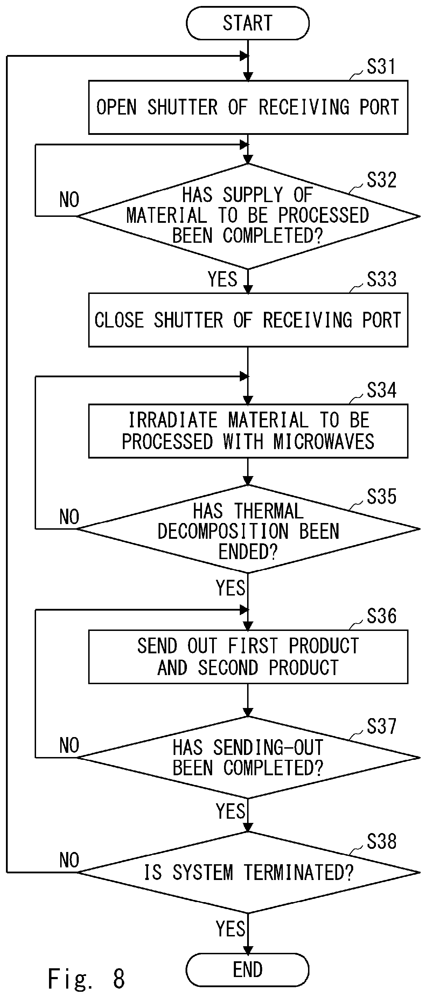

Next, processes performed by the thermal decomposition apparatus 30 will be described with reference to Fig. 8. Fig. 8 is a flowchart showing a processing method performed by the thermal decomposition apparatus. The flowchart shown in Fig. 8 is performed, for example, by the control apparatus 80 which controls the thermal decomposition apparatus 30.

First, the control apparatus 80 opens a shutter 311 of the receiving port 310 (Step S31). Note that, upon the opening of the shutter 311, the switching mechanism 20 switches the flow path so as to supply the material to be processed M10 to the thermal decomposition apparatus 30 which performs the operations in the flowchart.

Next, the control apparatus 80 determines whether or not the supply of the material to be processed M10 has been completed (Step S32). If the control apparatus 80 does not determine that the supply of the material to be processed M10 has been completed (Step S32: NO), the control apparatus 80 repeats Step S32. If the control apparatus 80 determines that the supply of the material to be processed M10 has been completed (Step S32: YES), the control apparatus 80 closes the shutter 311 of the receiving port 310 (Step S33).

Next, the control apparatus 80 starts the irradiation apparatus 301 to irradiate the material to be processed M10 with microwaves (Step S34).

Next, the control apparatus 80 determines whether or not the thermal decomposition has been ended (Step S35). Note that the control apparatus 80 may determine whether or not the thermal decomposition has been ended based on data received from the sensor 370 of the thermal decomposition apparatus 30. Alternatively, the control apparatus 80 may determine whether or not the thermal decomposition has been ended by determining whether or not the above-described switching condition is satisfied. If the control apparatus 80 does not determine that the thermal decomposition has been ended (Step S35: NO), the control apparatus 80 returns to Step S34 and continues the application of microwaves. If the control apparatus 80 determines that the thermal decomposition has been ended (Step S35: YES), the control apparatus 80 starts to send out the first product M21 and the second product M22 (Step S36).

Next, the control apparatus 80 determines whether or not the sending-out of the first product M21 and the second product M22 has been completed (Step S37). The control apparatus 80 determines whether or not the sending-out has been completed, for example, based on the data from the sensor 370. Alternatively, the control apparatus 80 may determine whether or not the sending-out has been completed by measuring a preset time. If the control apparatus 80 does not determine whether or not the sending-out has been completed (Step S37: NO), the control apparatus 80 returns to Step S36 and continue to send out the first product M21 and the second product M22. If the control apparatus 80 determines whether or not the sending-out has been completed (Step S37: YES), the control apparatus 80 proceeds to Step S38.

In Step S38, the control apparatus 80 determines whether or not the system is terminated (Step S38). If the control apparatus 80 does not determine that the system is terminated (Step S38: NO), the control apparatus 80 returns to Step S31 and repeats a series of the processes. If the control apparatus 80 determines that the system is terminated (Step S38: YES), the control apparatus 80 ends a series of the processes.

The first embodiment has been described above. By the above-described configuration, in the processing system 1 according to the first embodiment, the material to be processed M10 continuously or intermittently supplied from the supply apparatus 10 is thermally decomposed by a plurality of the thermal decomposition apparatuses 30 sequentially, and sent out to the first recovery apparatus 50 and the second recovery apparatus 70 sequentially. Thus, the processing system 1 can efficiently recover hydrogen and carbon. Therefore, according to the first embodiment, it is possible to provide a processing system and a processing method capable of efficiently recovering reusable materials.

### <Second Embodiment>

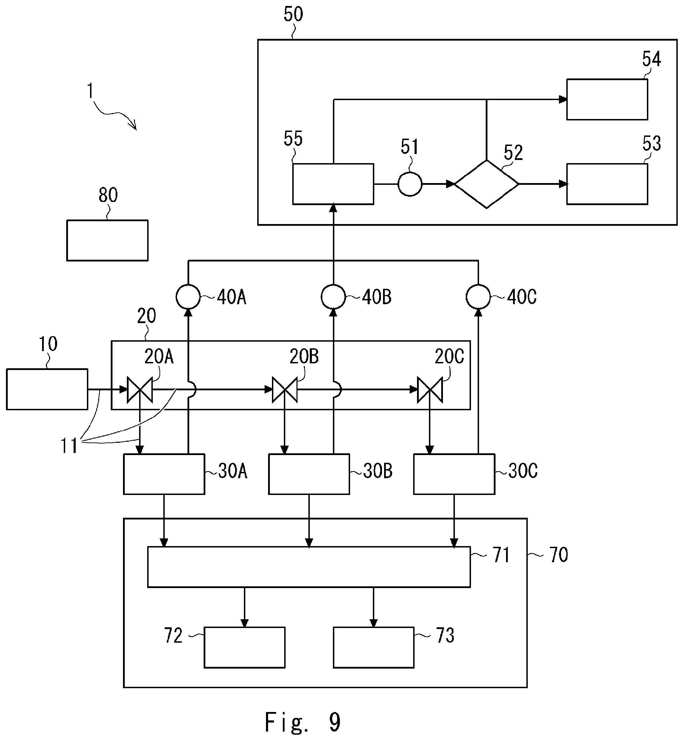

Fig. 9 is an overall configuration diagram of a processing system according to a second embodiment. The first recovery apparatus 50 according to the second embodiment includes a collection apparatus 55.

The collection apparatus 55 extracts a predetermined fluid such as carbon dioxide from the first product M21 received through the pressure control valve 40. The predetermined fluid is, for example, a gas having high water solubility. The collection apparatus 55 separates a high water-soluble fluid such as carbon dioxide from the first product M21 by, for example, a water replacement method. The collection apparatus 55 supplies the first product M21 obtained by separating the predetermined fluid to the hydrogen extraction apparatus 52 through the pressure control valve 51. By the above-described configuration, the first recovery apparatus 50 can reduce the load on the hydrogen extraction apparatus 52.

The second embodiment has been described above. According to the first and the second embodiments, it is possible to provide a processing system and a processing method capable of efficiently recovering reusable materials.

By the above-described configuration, the processing system 1 according to the embodiments recovers hydrogen and carbon from the material to be processed M10. The material to be processed M10 includes, for example, waste plastic. The Sustainable Development Goals (SDGs) adopted by the United Nations General Assembly include ensuring sustainable consumption and production. The processing system 1 can contribute to ensuring sustainable consumption and production by recovering reusable hydrogen and carbon from waste plastic. Further, the processing system 1 can receive at least a part of the electric power of apparatuses used in the processing system 1 from renewable energy. In this way, the processing system 1 can contribute to the realization of a sustainable society.

Although the present invention has been described above with reference to the embodiments, the present invention is not limited by the above descriptions. Various modifications that can be understood by those skilled in the art can be made to the configuration and details of the present invention within the scope of the invention.

This application is based upon and claims the benefit of priority from Japanese patent application No. 2023-150841, filed on September 19, 2023, the disclosure of which is incorporated herein in its entirety by reference.

### Reference Signs List

- 1: PROCESSING SYSTEM
- 10: SUPPLY APPARATUS
- 11: SUPPLY PIPE
- 20: SWITCHING MECHANISM
- 30: THERMAL DECOMPOSITION APPARATUS
- 40: PRESSURE CONTROL VALVE
- 50: FIRST RECOVERY APPARATUS
- 51: PRESSURE CONTROL VALVE
- 52: HYDROGEN EXTRACTION APPARATUS
- 53: PRESSURE ACCUMULATOR
- 54: GAS RECOVERY DEVICE
- 55: COLLECTION APPARATUS
- 70: SECOND RECOVERY APPARATUS
- 71: SEPARATION APPARATUS
- 72: CARBON RECOVERY DEVICE
- 73: RESIDUE RECOVERY DEVICE
- 80: CONTROL APPARATUS
- 90: WIND POWER GENERATION SYSTEM
- 200: SECONDARY BATTERY
- 300: CONTAINER
- 301: IRRADIATION APPARATUS
- 310: RECEIVING PORT
- 311: SHUTTER
- 320: GAS INLET
- 321: OPENING/CLOSING VALVE
- 330: TRAY
- 331: TRAY DRIVING UNIT
- 340: SECOND SENDING-OUT PORT
- 341: SHUTTER
- 350: FIRST SENDING-OUT PORT
- 351: SWITCHING VALVE
- 352: EXHAUST FAN
- 360: EXHAUST VALVE
- 370: SENSOR
- M10: MATERIAL TO BE PROCESSED
- M21: FIRST PRODUCT
- M22: SECOND PRODUCT

## Claims

1. A processing system comprising:
a supply apparatus configured to continuously or intermittently supply a material to be processed to a supply pipe including a branch part;
a switching mechanism configured to switch a flow path of the material to be processed in the branch part so as to be selectable;
a plurality of thermal decomposition apparatuses each configured to receive the material to be processed on a downstream side of each of a plurality of the branched supply pipes, and thermally decompose the received material to be processed by irradiating the received material to be processed with a microwave; and
a first recovery apparatus configured to sequentially recover a first product including a fluid generated by the thermal decomposition from each of the plurality of thermal decomposition apparatuses.

2. The processing system according to claim 1, wherein the supply apparatus is an extrusion apparatus configured to continuously extrude the material to be processed that has been heated and kneaded to the supply pipe or an injection apparatus configured to intermittently inject the material to be processed that has been heated and kneaded into the supply pipe.

3. The processing system according to claim 1, wherein each of the thermal decomposition apparatuses comprises:
a container configured to receive a predetermined amount of the material to be processed;
an irradiation apparatus configured to irradiate the material to be processed with a microwave in order to thermally decompose the material to be processed in the container;
a first sending-out port configured to send out the first product generated by the thermal decomposition; and
a second sending-out port configured to send out a second product other than the first product.

4. The processing system according to claim 3, further comprising a second recovery apparatus configured to sequentially recover the second product from each of the thermal decomposition apparatuses, and separate and extract carbon from the recovered second product.

5. The processing system according to any one of claims 1 to 4,
wherein the switching mechanism switches the flow path so as to supply the material to be processed received from the supply apparatus to the thermal decomposition apparatus that has sent out the thermally-decomposed material to be processed.

6. The processing system according to claim 5, further comprising a control apparatus configured to control the switching mechanism so as to switch the flow path based on a predetermined switching condition.

7. The processing system according to claim 6, wherein the control apparatus controls the switching mechanism so as to switch the flow path at each switching time preset as the switching condition.

8. The processing system according to claim 1, wherein
the supply apparatus supplies the material to be processed containing at least a resin to the supply pipe, and
each of the thermal decomposition apparatuses thermally decomposes the material to be processed by irradiating the material to be processed with the microwave so that at least hydrogen can be extracted therefrom.

9. The processing system according to claim 8, wherein the supply apparatus supplies the material to be processed containing the resin and a catalyst for accelerating the thermal decomposition to the supply pipe.

10. The processing system according to claim 9, wherein each of the thermal decomposition apparatuses thermally decomposes the material to be processed by irradiating the material to be processed with the microwave having a frequency of 2.45 GHz.

11. The processing system according to claim 1, further comprising a secondary battery configured to supply electric power to the thermal decomposition apparatuses.

12. The processing system according to claim 11, wherein the secondary battery can store electric power generated by renewable energy.

13. A processing method comprising the steps of:
continuously or intermittently supplying a material to be processed to a supply pipe including a branch part;
sequentially selecting a flow path of the material to be processed in the branch part;
supplying the material to be processed to, among thermal decomposition apparatuses provided in a plurality of the respective branched supply pipes, the thermal decomposition apparatus related to the selection;
causing the thermal decomposition apparatus that has received the material to be processed to thermally decompose the material to be processed; and
sequentially recovering a fluid generated after the thermal decomposition from each of a plurality of the thermal decomposition apparatuses.
